# EUROPEAN PATENT APPLICATION

(11) **EP 4 563 292 A1**
(43) Date of publication of application: **04.06.2025**
(21) Application number: 22956574.2
(22) Date of filing: 25.08.2022
(51) Int. Cl.: B25J 5/00, B25J 9/00, B25J 11/00, B25J 19/00, B25J 19/02, B60B 33/04

(54) **DRIVING ROBOT**

(71) Applicant: LG Electronics Inc., Yeongdeungpo-gu Seoul 07336 (KR)
(72) Inventor: KIM, Moonchan, Seoul 06772 (KR); LEE, Iljae, Seoul 06772 (KR); LEE, Gunho, Seoul 06772 (KR); LEE, Wondong, Seoul 06772 (KR); MUN, Sanghun, Seoul 06772 (KR); KIM, Woojin, Seoul 06772 (KR)
(74) Representative: Vossius & Partner Patentanwälte Rechtsanwälte mbB
(86) International application number: PCT/KR2022/012745
(87) International publication number: WO 2024/043368

(57) **Abstract**

A driving robot comprises: a lower housing; a frame assembly disposed within the lower housing; a driving unit disposed under the frame assembly; a battery seated in the frame assembly; and a substrate module coupled to the frame assembly and disposed over the battery, wherein the frame assembly comprises: a base plate; a pair of side frames disposed on both left and right sides of the battery; and a front frame disposed at the front of the frame assembly and connected to the pair of side frames. The driving robot is open in the direction of the rear of the frame assembly in which electronic components are mounted, and thus has an advantage of easy maintenance.

## Description

### [Technical Field]

The present disclosure relates to a driving robot with a simple assembly and disassembly structure, easy maintenance, and rational space utilization of a mounting space.

### [Background]

To take charge of a portion of factory automation, robots have been developed for industrial use. Recently, fields of application of the robots have been further expanding, and not only a medical robot and an aerospace robot, but also a robot that may be used in a daily life are being developed.

Such robot for the daily life is being developed to provide a specific service (e.g., shopping, serving, conversation, cleaning, and the like) in response to a user command. Unlike the industrial robot that performs repetitive tasks by being fixed at a specific location or a robot that performs a specific specialized function at a high cost, such as the medical or aerospace robots, travel and communication functions are important for the robot for the daily life and the robot for the daily life is difficult to be distributed when a manufacturing cost thereof is too high.

In particular, because the robot does not walk on two feet like humans but moves using wheels, the robot must be able to move over a bump on the floor or avoid an obstacle, must be able to minimize impact without falling when moving over the bump on the floor, and must be able to make quick decisions using multiple sensors to avoid the obstacle.

One that has been actively developed recently as an example of such a robot is a serving robot that may transport a bowl containing liquid food such as noodle or soup. The bowl containing the food may be put on a tray equipped in the robot and the robot may transport the food to a customer or a service provider.

A driving robot that transports food is mainly used indoors, but there is a risk of food spilling or malfunctioning resulted from a collision with an obstacle, so that a situation in which the robot needs to be disassembled for repair occurs. In this regard, when disassembly and reassembly are difficult, maintenance time may be long and functions may not operate properly.

### [Summary]

### [Technical Problem]

The present disclosure is to provide a driving robot with a simple assembly and disassembly structure, easy maintenance, and rational space utilization of a mounting space.

### [Technical Solutions]

Provided is a driving robot including a lower housing, a frame assembly positioned inside the lower housing, a driving structure positioned under the frame assembly, a battery seated on the frame assembly, and a substrate module coupled to the frame assembly and positioned above the battery, wherein the frame assembly includes a base plate, a pair of side frames positioned on left and right sides of the battery, and a front frame positioned at a front side of the frame assembly and connected to the pair of side frames.

The pair of side frames may include substrate rails formed on respective surfaces thereof facing each other, and substrate clips positioned at front ends of the respective substrate rails, wherein an end of the substrate module is fitted into each substrate clip.

The driving robot may further include a screw fastening portion located at a rear end of each substrate rail, wherein a screw for fixing the substrate module is inserted into the screw fastening portion.

The driving robot may further include antenna radiators located outward on left and right sides of the pair of side frames.

The driving robot may further include an antenna cable having one end coupled to a rear surface of the substrate module and bent into a U shape at the rear of the side frames to allow an opposite end thereof to be connected to one of the antenna radiators.

The frame assembly may have an open rear surface, and may include a seating portion of the battery defined by the base plate, the front frame, and the pair of side frames.

The driving structure may include a caster housing coupled to the base plate and having an open bottom, a caster damper fixed to an upper end of the caster housing and extendable and contractable vertically, a shaft coupled to a lower end of the caster damper and moveable vertically, a caster body rotatably fastened to the shaft, and a caster wheel coupled to the caster body to be rotatable about a horizontal axis.

One side of each side frame may be supported by the caster housing.

The caster housing may include a first caster housing located at a left side of the base plate and a second caster housing located at a right side of the base plate, and the battery may have a size corresponding to a gap between the first caster housing and the second caster housing.

The driving robot may further include a pair of base support bars located on the base plate between the first caster housing and the second caster housing, and the battery may slide in a front and rear direction along the base support bars.

Each base support bar may include a battery clip located at a front end thereof, wherein a guide protrusion of the battery is fitted into the battery clip, and a screw fastening portion located at a rear end thereof, wherein a screw for fixing the battery is inserted into the screw fastening portion.

The driving robot may further include a pair of support frames extending upward from the base plate and supporting a lower portion of the front frame, and the pair of support frames may be positioned on the same plane as the pair of side frames.

The driving structure may include a wheel frame having one side hinge-coupled to the frame assembly and coupled with a driving motor, a main wheel rotatable by being fastened to the driving motor, and a wheel damper positioned between an opposite side of the wheel frame and the frame assembly.

The front frame may have a rectangular bar shape extending in a left and right direction, each support frame may be in contact with a bottom surface and a rear surface of the front frame, each side frame may be in contact with a rear surface of each support frame and a top surface of the front frame, and the frame assembly may further include a fixed frame located on a front surface of the front frame and fastened to each side frame and each support frame.

The driving robot may further include a first screw inserted into the rear surface of each support frame and fastened to the front frame, a second screw inserted into a top surface of each side frame and fastened to each support frame by extending through the front frame, and a third screw inserted into a front surface of the fixed frame and fastened to each side frame and each support frame.

The driving robot may further include a Lidar or a camera coupled to a front surface of the base plate, and a sensor cable connecting the Lidar or the camera with the substrate module and passing through a space below the front frame.

The lower housing may include an opening defined across a rear surface and a top surface of the lower housing, wherein the substrate module is exposed through the opening, and an L-shaped service cover covering the opening.

The driving robot may further include a tray frame coupled to an upper portion of the lower housing and extending upward, and a tray module coupled to the tray frame.

The driving robot may further include connecting frames coupled to both sides of the front frame, and the tray frame may be fastened to the connecting frames.

### [Advantageous Effects]

The driving robot of the present disclosure is easy to maintain because the rear side of the frame assembly, where the electronic components are mounted, is open.

The driving robot of the present disclosure is easy to maintain because the substrate module and the battery may be easily removed and assembled.

The driving robot of the present disclosure may secure the performance of the antenna by arranging the antenna and other components in the separated manner.

The caster is connected in series to the caster housing, so that the caster may implement the stable suspension structure without colliding with the housing.

Effects obtainable from the present disclosure are not limited by the above mentioned effects, and other unmentioned effects can be clearly understood from the above description by those having ordinary skill in the technical field to which the present disclosure pertains.

### [Brief Description of the Drawings]

FIG. 1 is a diagram illustrating a cloud system based on a 5G network according to an embodiment of the present disclosure.
FIG. 2 is a diagram for illustrating a configuration of a driving robot according to an embodiment of the present disclosure.
FIG. 3 is a front perspective view of a driving robot according to an embodiment of the present disclosure.
FIG. 4 is a rear perspective view of a driving robot according to an embodiment of the present disclosure.
FIG. 5 is an exploded perspective view of a driving robot according to an embodiment of the present disclosure.
FIG. 6 is an exploded perspective view of a lower portion of a driving robot according to an embodiment of the present disclosure.
FIG. 7 is a rear perspective view in which a service cover of a driving robot according to an embodiment of the present disclosure is removed.
FIG. 8 is a rear perspective view showing a state in which a lower second casing of a driving robot according to an embodiment of the present disclosure is removed.
FIG. 9 is a view showing a frame assembly of a driving robot according to an embodiment of the present disclosure.
FIG. 10 is a plan view illustrating a lower electrical component portion of a driving robot according to an embodiment of the present disclosure.
FIG. 11 is a rear view illustrating a lower electrical component portion of a driving robot according to an embodiment of the present disclosure.
FIG. 12 is a C-C cross-sectional view of FIG. 9.
FIG. 13 is a view for illustrating a method for fastening a battery of a driving robot according to an embodiment of the present disclosure to a frame assembly.
FIG. 14 is a view for illustrating a method for fastening a substrate module of a driving robot according to an embodiment of the present disclosure to a frame assembly.
FIG. 15 is a view illustrating a frame assembly and a driving unit of a driving robot according to an embodiment of the present disclosure.
FIG. 16 is a D-D cross-sectional view of FIG. 13.
FIG. 17 is a view showing a main wheel of a driving robot according to an embodiment of the present disclosure.

### [Best Mode]

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element may be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

A robot is a machine device capable of automatically performing a certain task or operation. The robot may be controlled by an external control device or may be embedded in the control device. The robot may perform tasks that are difficult for humans to perform, such as repeatedly processing only a preset operation, lifting a heavy object, performing precise tasks or a hard task in extreme environments.

In order to perform such tasks, the robot includes a driver such as an actuator or a motor, so that the robot may perform various physical operations, such as moving a robot joint.

Industrial robots or medical robots having a specialized appearance for specific tasks due to problems such as high manufacturing costs and dexterity of robot manipulation were the first to be developed.

Whereas industrial and medical robots are configured to repeatedly perform the same operation in a designated place, driving robots have recently been developed and introduced to the market. Robots for use in the aerospace industry may perform exploration tasks or the like on distant planets that are difficult for humans to directly go to, and such robots have a driving function.

In order to perform the driving function, the robot has a driver, wheel(s), a frame, a brake, a caster, a motor, etc. In order for the robot to recognize the presence or absence of surrounding obstacles and move while avoiding the surrounding obstacles, an evolved robot equipped with artificial intelligence has recently been developed.

Artificial intelligence refers to a technical field for researching artificial intelligence or a methodology for implementing the artificial intelligence. Machine learning refers to a technical field for defining various problems handled in the artificial intelligence field and for researching methodologies required for addressing such problems. Machine learning is also defined as an algorithm that improves performance of a certain task through continuous experience.

An artificial neural network (ANN) is a model used in machine learning, and may refer to an overall model having problem solving ability, which is composed of artificial neurons (nodes) that form a network by a combination of synapses. The artificial neural network (ANN) may be defined by a connection pattern between neurons of different layers, a learning process of updating model parameters, and an activation function of generating an output value.

The artificial neural network (ANN) may include an input layer and an output layer, and may optionally include one or more hidden layers. Each layer includes one or more neurons, and the artificial neural network (ANN) may include a synapse that interconnects neurons and other neurons.

In the artificial neural network (ANN), each neuron may output a function value of an activation function with respect to input signals received through synapses, weights, and deflection.

A model parameter may refer to a parameter determined through learning, and may include the weight for synapse connection and the deflection of neurons. In addition, the hyperparameter refers to a parameter that should be set before learning in a machine learning algorithm, and includes a learning rate, the number of repetitions, a mini-batch size, an initialization function, and the like.

The purpose of training the artificial neural network (ANN) may be seen as determining model parameters that minimize a loss function according to the purpose of the robot or the field of use of the robot. The loss function may be used as an index for determining an optimal model parameter in a learning process of the artificial neural network (ANN).

Machine learning may be classified into supervised learning, unsupervised learning, and reinforcement learning according to learning methods.

Supervised learning refers to a method for training the artificial neural network (ANN) in a state where a label for learned data is given. Here, the label may refer to a correct answer (or a resultant value) that should be inferred by the artificial neural network (ANN) when the learned data is input to the artificial neural network (ANN). Unsupervised learning may refer to a method for training the artificial neural network (ANN) in a state where a label for learned data is not given. Reinforcement learning may refer to a learning method in which an agent defined in the certain environment learns to select an action or sequence of actions that may maximize cumulative compensation in each state.

Among artificial neural networks, machine learning implemented as a deep neural network (DNN) including a plurality of hidden layers is also referred to as deep learning, and deep learning is a part of machine learning. Hereinafter, machine learning is used in a sense including deep learning.

Artificial intelligence (AI) technology is applied to the robot, so that the robot may be implemented as a guide robot, a driving robot, a cleaning robot, a wearable robot, an entertainment robot, a pet robot, and an unmanned aerial robot, etc.

The robot may include a robot control module for controlling operation thereof, and the robot control module may refer to a software module or a chip implemented in hardware.

By means of sensor information obtained from various types of sensors, the robot may acquire state information of the robot, may detect (recognize) the surrounding environment and the object, may generate map data, may determine a driving path and a driving plan, may determine a response to user interaction, or may determine a necessary operation.

The robot may perform the above-described operations using a learning model composed of at least one artificial neural network (ANN). For example, the robot may recognize the surrounding environment and object using a learning model, and may determine a necessary operation using the recognized surrounding environment information or object information. Here, the learning model may be directly learned from the robot or learned from an external device such as an AI server.

In this case, whereas the robot may perform a necessary operation by directly generating a result using the learning model, the robot may also perform an operation by transmitting sensor information to an external device such as an AI server and receiving the resultant information generated thereby.

The robot may perform autonomous driving through artificial intelligence. Autonomous driving refers to a technique in which a movable object such as a robot may autonomously determine an optimal path by itself and may move while avoiding collision with an obstacle. The autonomous driving technique currently being applied may include a technique in which the movable object (e.g., a robot) may travel while maintaining a current driving lane, a technique in which the movable object may travel while automatically adjusting a driving speed such as adaptive cruise control, a technique in which the movable object may automatically travel along a predetermined path, and a driving technique in which, after a destination is decided, a path to the destination is automatically set.

In order to perform autonomous driving, the movable object such as the robot may include a large number of sensors to recognize data of the surrounding situation. For example, the sensors may include a proximity sensor, an illumination sensor, an acceleration sensor, a magnetic sensor, a gyro sensor, an inertial sensor, an RGB sensor, an infrared (IR) sensor, a fingerprint recognition sensor, an ultrasonic sensor, an optical sensor, a microphone, a Lidar, a radar, and the like.

The robot may perform autonomous driving not only based on information collected by sensors, but also based on image information collected by an RGBC camera and an infrared (IR) camera and sound information collected through a microphone. In addition, the robot may travel based on information received through a user input unit. Map data, position information, and information about peripheral situations may be collected through a wireless communication unit. The collected information is requisite for autonomous driving.

Map data may include object identification information for various objects disposed in a space where the robot moves. For example, the map data may include object identification information for fixed objects such as a wall and a door, and other object identification information for movable objects such as a flowerpot and a desk. In addition, the object identification information may include a name, a type, a distance, a location, etc.

Therefore, the robot may essentially include sensors, various input units, a wireless communication unit, and the like to collect data that may be learned by artificial intelligence, and may perform optimal operations by synthesizing various types of information. The learning processor for performing artificial intelligence may perform learning by being mounted in a controller embedded in the robot, may transmit the collected information to a server, may perform learning through the server, and may retransmit the learned result to the robot, so that the robot may perform autonomous driving based on the learned result.

A robot equipped with artificial intelligence may collect the surrounding information even in a new place to implement the entire map, and a large amount of information about a place of the major activity zone may be accumulated, so that the robot may perform more accurate autonomous driving.

The robot may include a touchscreen or a button to receive a user input, and may receive a command by recognizing a user's voice. In order to convert a voice input signal into a character string, the processor may obtain information about the intention corresponding to the user input using at least one of a speech to text (STT) engine for converting a voice input into a character string and a natural language processing (NLP) engine for obtaining information about the intention of natural language.

In this case, at least one of the STT engine and the NLP engine may include an artificial neural network (ANN) trained by a machine learning algorithm. In addition, at least one of the STT engine and the NLP engine may be trained by the learning processor, may be trained by the learning processor of the AI server, or may be trained by distributed processing of the trained results.

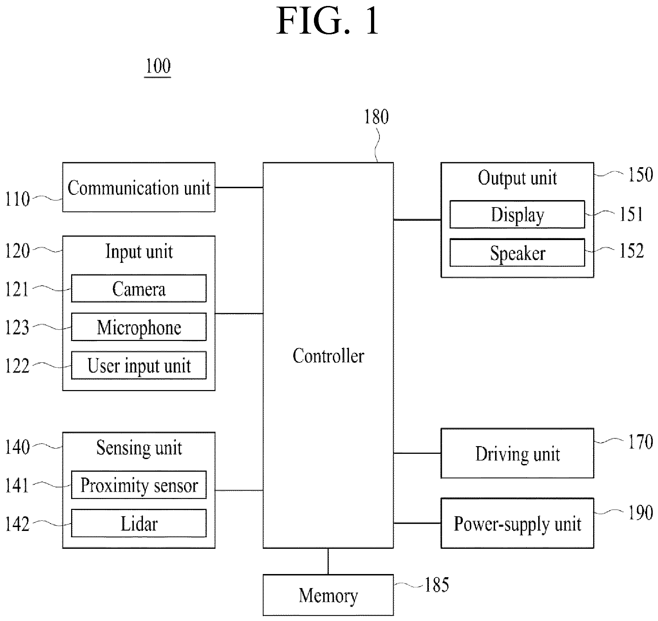

FIG. 1 is a diagram illustrating a cloud system 1000 based on a 5G network according to an embodiment of the present disclosure.

Referring to FIG. 1, the cloud system 1000 may include a driving robot 100, a mobile terminal 300, a robot control system 200, various devices 400, and a 5G network 500.

The driving robot 100 is a robot that transports goods (articles) from a departure point to a destination. If the driving robot 100 is a transport robot that delivers goods, it can move directly from a logistics center to a destination. Alternatively, after the driving robot is loaded on a vehicle at the logistics center and is then delivered to the vicinity of the destination by the vehicle, the driving robot is unloaded from the vehicle and then moves to the destination.

In addition, the driving robot 100 may move articles to the destination not only outdoors but also indoors. The driving robot 100 can be implemented as an AGV, and the AGV may be a transport device that moves by a sensor, a magnetic field, a vision device, etc. on the floor.

When the driving robot 100 is a serving robot that transports food, it should safely transport a bowl while avoiding fixed obstacles such as a table and people indoors. There is a tray for seating the bowl, and unlike a transport robot, a cover is omitted so as to easily put in and take out the bowl.

In addition, because the bowl has an open top, the driving robot 100 should be able to travel smoothly to operate more stably than the transport robot for a case in which the bowl tilts or falls.

The mobile terminal 300 may communicate with the driving robot 100 via the 5G network 500. The mobile terminal 300 may be a device carried by a user who installs a partition in the storage area to load articles, or may be a device carried by a recipient of the loaded articles. The mobile terminal 300 may provide information based on images, and the mobile terminal 300 may include mobile devices such as a mobile phone, a smartphone, a wearable device (e.g., a watch-type terminal, a glass-type terminal, an HMD).

The robot control system 200 may remotely control the driving robot 100 and respond to various requests of the driving robot 100. For example, the robot control system 200 may perform calculations using artificial intelligence (AI) based on the request from the driving robot 100.

In addition, the robot control system 200 may determine a movement path of the driving robot 100. When there is a plurality of destinations, the robot control system 200 may determine the order of the destinations when there are multiple destinations.

The various devices 400 may include a personal computer (PC) 400a, an autonomous vehicle 400b, a home robot 400c, etc. When the driving robot 100 arrives at the transport destination of the articles, the driving robot 100 can directly deliver the articles to the home robot 400c through communication with the home robot 400c.

The various devices 400 may be connected to the driving robot 100, the mobile terminal 300, the robot control system 200, etc., via the 5G network 500 by wire or wirelessly.

The driving robot 100, the mobile terminal 300, the robot control system 200, and various devices 400 are all equipped with 5G modules to transmit and receive data at a rate of 100 Mbps to 20 Gbps (or higher), so that large video files can be transmitted to various devices, and power consumption can be minimized by operating at low power. However, the transfer rate may be implemented differently depending on the embodiments.

The 5G network 500 may include a 5G mobile communication network, a short-range network, the Internet, etc., and may provide a communication environment for devices by wire or wirelessly.

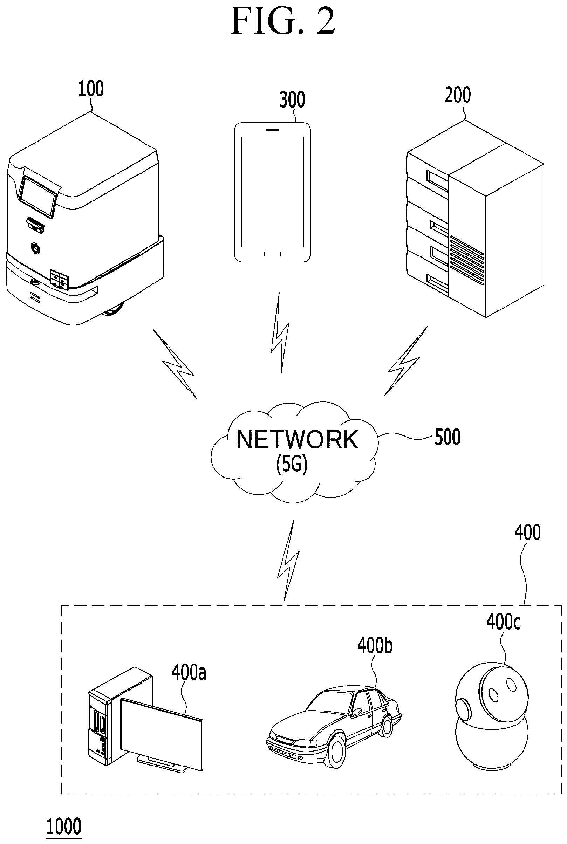

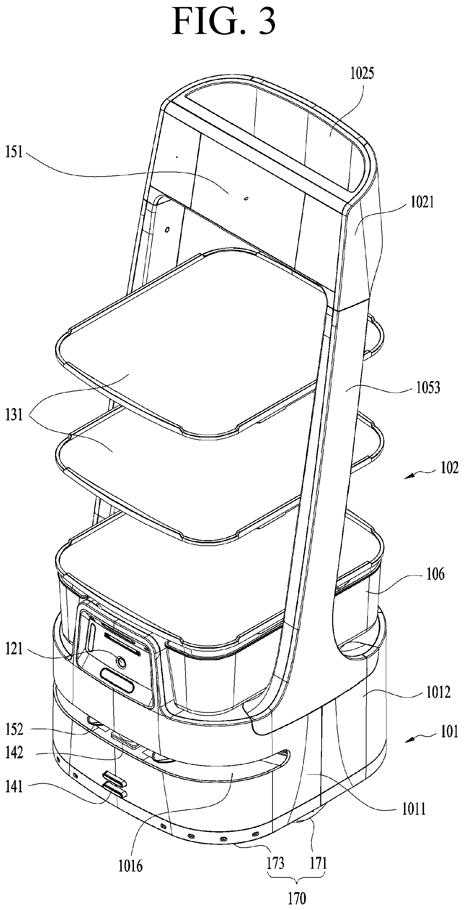

FIG. 2 is a diagram illustrating appearance of the driving robot 100 according to an embodiment of the present disclosure. The driving robot 100 according to an embodiment of the present disclosure will be described with reference to FIGS. 3 to 5.

Referring to FIG. 2, the driving robot 100 may include a body including a storage area 50, and constituent components to be described later may be included in the body. The driving robot 100 may include a communication unit 110, an input unit 120, a sensor unit 140, an output unit 150, a memory 185, a wheel driving unit 170, a controller 180, and a power-supply unit 190. The constituent components shown in FIG. 2 are not always required to implement the driving robot 100, such that it should be noted that the driving robot 100 according to the present disclosure may include more or fewer components than the elements listed above.

The communication unit 110 may include a wired or wireless communication module capable of communicating with the robot control system 200.

As an optional embodiment, the communication unit 110 may be equipped with modules for GSM, CDMA, LTE, 5G, WLAN, Wi-Fi, Bluetooth, RFID, infrared communication (IrDA), ZigBee, and NFC communication.

The input unit 120 may include a user input unit 122 for receiving information from a user. As an optional embodiment, the input unit 120 may include a camera 121 for inputting an image signal, and a microphone 123 (hereinafter referred to as a "microphone") for receiving an audio signal. Here, the camera 121 or the microphone 123 may be treated as a sensor, and a signal acquired from the camera 121 or the microphone 123 may be referred to as sensing data or sensor information.

The input unit 120 may acquire input data to be used when acquiring output data using learning data and a learning model for model learning. The input unit 120 may obtain unprocessed input data. In this case, the controller 180 may extract input feature points as preprocessing for the input data.

The camera 121 may be located in front to detect obstacles in front, and as shown in FIG. 3, a plurality of cameras 121 may be arranged to be different in angle. In more detail, the plurality of cameras 121 may have different capture directions, such as a camera for widely recognizing a front-view area and a camera for capturing a floor.

Alternatively, cameras with different functions may be provided. For example, a wide-angle camera, an infrared (IR) camera, etc. may be provided. The camera may serve as a sensor unit 140 for detecting surrounding objects.

The user input unit 122 may be provided with a touch panel overlapping with a button or a display 151. Alternatively, a user command may be input remotely through the communication unit 110. In this case, the user input unit 122 may include a PC 400 or a remote control device separately provided from the driving robot 100.

Since the user input unit 122 includes all methods capable of receiving user commands, the user input unit 122 can recognize user commands through voice recognition. That is, a voice recognition device that analyzes voice collected from the microphone 123 and extracts user commands can also serve as the user input unit 122.

The input unit 120 may include an article information input unit, and the article information input unit may receive information about the article's size, information about the article's weight, destination information, information about a transport requester, etc. At this time, the article information input unit may include a code reader.

The sensor unit 140 may obtain at least one of internal information of the driving robot 100, surrounding environment information of the driving robot 100, and user information using various sensors.

At this time, the sensor unit 140 may include various types of sensors for recognizing the surroundings for autonomous driving. Representative examples may include a distance detection sensor or a proximity sensor 141 and a Lidar 142.

The proximity sensor 141 may include an ultrasonic sensor that recognizes nearby objects and determines the distance to the objects based on the time taken for emitted ultrasonic waves to return. A plurality of proximity sensors may be provided along the circumference, and may also be provided on an upper side to detect obstacles located on the upper side.

The Lidar 142 is a device that precisely expresses exterior appearances of the surroundings by emitting laser pulses and receiving the light that is reflected from the surrounding objects. The operation principle of the Lidar is similar to that of a radar, but different electromagnetic waves are used in the Lidar and the radar, so that the Lidar and the radar are designed to use different technologies and different utilization ranges.

Lasers may damage human eyesight because they use light with a wavelength of 600 to 1000 nm. The Lidar 342 uses a longer wavelength than the lasers, and is used to measure not only the distance to a target object, but also a moving speed and direction, temperature, surrounding atmospheric material analysis, a concentration measurement, and the like.

In addition, the sensor unit 140 may include an illumination sensor, an acceleration sensor, a magnetic sensor, a gyro sensor, an inertial sensor, an RGB sensor, an infrared (IR) sensor, a fingerprint recognition sensor, an ultrasonic sensor, a light sensor, an optical sensor, etc.

The output unit 150 may generate various output signals related to visual, auditory and/or tactile sensations. The output unit 150 may include an optical output unit that outputs visual information, a display 151, etc. The output unit 150 may include a speaker 152 for outputting auditory information, an ultrasonic output unit for outputting ultrasonic signals belonging to an inaudible frequency, etc., and a haptic module for outputting tactile information.

The memory 185 may store data that supports various functions of the driving robot 100. The memory 185 may store not only a plurality of application programs (or applications) driven by the driving robot 100, but also data and commands required to operate the driving robot 100.

In addition, the memory 185 may store information required to perform operations using artificial intelligence, machine learning, and artificial neural networks. The memory 185 may store a deep neural network model. The deep neural network model may be used to infer a result value for new input data rather than learning data, and the inferred value may be used as a basis of determination required to perform a certain operation.

The power-supply unit 190 may receive external power or internal power under control of the controller 180, such that the power-supply unit 190 may supply the received power to the constituent components included in the driving robot 100. The power-supply unit 190 may include, for example, a battery. The battery 191 may be implemented as an embedded battery or a replaceable battery. The battery may be charged by a wired or wireless charging method, and the wireless charging method may include a magnetic induction method or a magnetic resonance method.

The driving unit 170 is a means for moving the driving robot 100, may include wheels or legs, and may include a wheel driving unit and a leg driving unit for controlling the wheels or legs. A plurality of wheels provided on the bottom surface of the wheel driving unit may be controlled to move the driving robot 100 including the body. The wheels may include a main wheel 171 for fast driving, a caster 173 for changing the direction to another direction, and an auxiliary caster for stable driving so that the loaded articles (L) do not fall during driving.

The leg driving unit (not shown) may control multiple legs according to control of the controller 180, and may thus move the body. The plurality of legs may correspond to a configuration formed so that the driving robot 100 can walk or run. The plurality of legs may be implemented as four legs, but the scope of the present disclosure is not limited thereto. The plurality of legs may be coupled to the body to be integrally formed, and may be implemented to be detachably coupled to the body.

The driving robot 100 may move the body through the driving unit 170 having at least one of the wheel driving unit and/or the leg driving unit. However, in this specification, an example in which the wheel driving unit is mounted on the driving robot 100 will be mainly described.

The controller 180 is a module that controls the configurations of the driving robot 100. The controller 180 may refer to a data processing device embedded in hardware that has a physically structured circuit to perform a function expressed by code or commands included in a program. As an example of the data processing device embedded in hardware, this exemplary data processing device may include processing devices such as a microprocessor, a central processing unit (CPU), a processor core, a multiprocessor, an ASIC, and an FPGA, but the scope of the present disclosure is not limited thereto.

The driving robot 100 may include a loading area 50 in a main body, and the loading area 50 may include a side wall or cover 10 to protect the loaded article from falling. Referring to FIG. 3, it is illustrated that the cover 10 is disposed, but a form in which only the side wall is disposed while omitting a top surface is also possible.

The loading area 50 does not have a separate layer division in the drawing, but it may be composed of a plurality of layers to load a plurality of articles in the layers. After unloading an article L on a lower side, an article on an upper side may be moved to a lower layer and additionally unloaded.

For example, the controller 180 may collect the above information through the input unit 120. The input of the input unit 120 may also include a touch input on the display.

Based on the collected information, the controller 180 may transmit information on the articles (L) loaded in the loading area 50 to the mobile terminal 200 (see FIG. 1) through the communication unit 110.

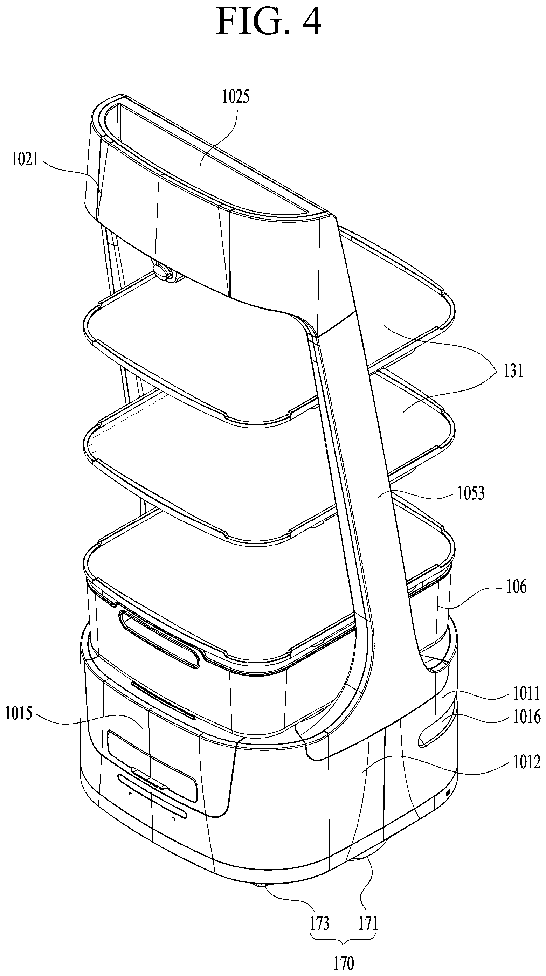

FIG. 3 is a front perspective view of the driving robot 100 according to an embodiment of the present disclosure, and FIG. 4 is a rear perspective view of the driving robot 100 according to an embodiment of the present disclosure.

A lower portion 101 of the driving robot 100 of the present disclosure, which is equipped with the driving unit 170, a substrate module 181, the battery 191, and the like, may be applied to all robots equipped with a travel function, such as a serving robot, a transport robot, or a sterilization robot.

However, for convenience of description, the description will be made based on the serving robot equipped with a tray module 131 at an upper portion as shown in FIGS. 3 and 4, but it may also be applied to other types of driving robots 100.

Referring to FIG. 3, the driving robot 100 may be divided into the lower portion 101 and an upper portion 102. The lower portion 101 may include a frame assembly 104 for mounting electronic components, and the driving unit 170 located under the frame assembly 104 and responsible for the movement of the driving robot 100.

The electrical components mounted on the frame assembly 104 include the substrate module 181, which is an assembly of a plurality of ICs and a substrate, as a controller that controls the driving robot 100. In addition, the battery 191 that supplies power, various sensors for assisting the travel, the camera 121, and the like may be mounted. The speaker 152, an LED lamp, or the like for output may be mounted.

The display 151 may be in charge of touch input and visual output. Because the touch input is performed by hand and the visual output is recognized by eyes, the display 151 is disposed at the upper portion 102 considering a user's height.

Most of the electrical components except for the display 151 may be located at the lower portion 101. The lower portion 101 may include a lower housing 1011, 1012, 1013, 1014, and 1015 forming an outer appearance thereof, and the lower structure 101 may have a cylindrical or rectangular box shape.

As shown in FIG. 3, the lower structure 101 may be formed to have a height smaller than a width to secure stability when the driving robot 100 travels. When the bowl or the article is seated on the tray module 131, which is the upper portion 102, a center of gravity may move upward, so that most of the electronic components may be placed at the lower portion 101 to lower the center of gravity.

The frame assembly 104 of the lower portion 101 may be made of a metal material, so that a weight of the lower portion 101 may be greater than that of the upper portion. To secure greater weight of the lower portion 101, a weight may be added on the lower portion 101.

The Lidar 142, the camera 121, the proximity sensor, and the like may be disposed at a front portion of the lower portion 101. Because the Lidar 142 has a wide sensing angle, the Lidar 142 may be seated in a groove 1016 that is recessed rearward from a front surface as shown in FIG. 3. The groove 1016 may have a horizontally elongated shape and may have a shape that is recessed rearward by about 1/3 of a depth when viewed from the side.

Even when water pours from above, water is not directly introduced into the groove 1016, so that a failure of the Lidar 142 located inside the groove 1016 resulted from submergence may be prevented from occurring. In addition to the Lidar 142, electronic components that should be exposed to the outside, such as the speaker 152 and a heat dissipation fan 187, may be disposed in the groove 1016 to further secure durability.

The camera 121 may be positioned at a front side of a top surface of the lower portion 101. The driving robot 101 may be equipped with a plurality of cameras arranged at different angles to recognize the object in a wide range. That is, the camera 121 may include at least one of a first camera 121 facing forward, a second camera 121 obliquely inclined upward, and a third camera 121 obliquely inclined downward.

The driving unit 170 positioned beneath the lower portion 101 may include a plurality of wheels, and more specifically, may include the main wheel 171 including a motor 1715 providing a traveling force, and a caster 173 that controls a direction and enhances travel safety.

The main wheel 171 may receive rotational power centered on a shaft of the motor extended laterally and travel, and a caster body 1732 to which a caster wheel 1731 is connected may be coupled to the lower portion 101 to be rotatable about a shaft 1736 extending vertically.

The upper portion 101 includes a tray frame 1055 extending upward from the lower housing and the tray module 131 coupled to the tray frame 1055. To stably support the tray module 131, a pair of tray frames 1055 may extend upward on both left and right sides, and the tray module 131 may be supported by tray holders 133 coupled onto the tray frames 1055 on both sides.

As illustrated in FIG. 3, a plurality of tray modules 131 may be included. The tray frame 1055 is inclined obliquely rearward, and a front space of the tray frame 1055 is secured relatively wide, making it easier to put in and take out the bowl.

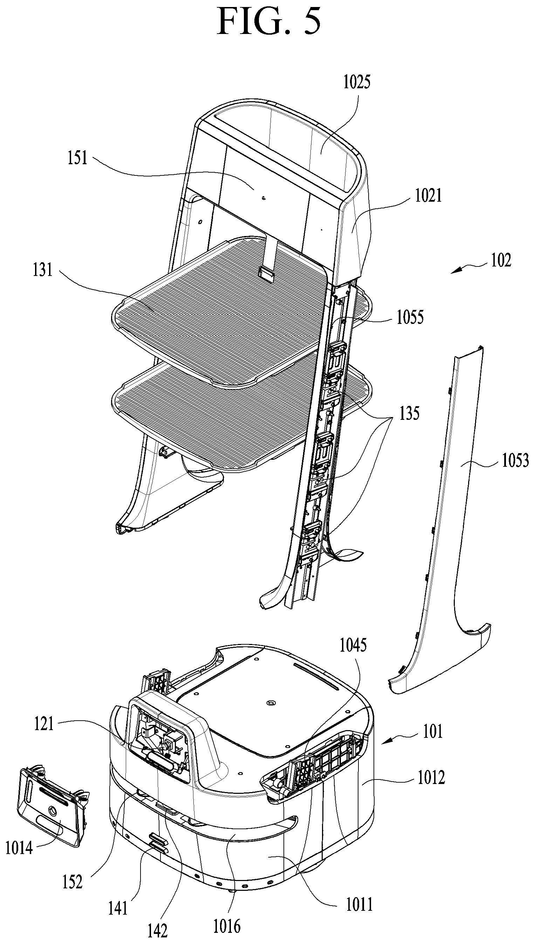

Upper ends of the pair of tray frames 1055 may include a head frame 1021 where they are connected to each other. The display 151 described above may be located at a front side of the head frame 1021. The electronic components other than the display 151 are not located at the head frame 1021, so that an upper basket 1025 may be disposed as shown in FIG. 5.

Supplies such as wet tissues or toilet paper may be placed in the upper basket 1025, so that customers may easily take the supplies. Further, because the upper basket 1025 is a portion that is not contaminated by food broth or the like, the upper basket 1025 may be hygienically managed.

A slide basket 106 that is seated on the top surface of the lower housing may be further disposed. Because the slide basket 106 is supported by the top surface of the lower housing, the slide basket 106 may store relatively heavy articles such as empty bowls. The slide basket 106 has sufficient depth to prevent the broth or the like from spilling and is detachable from the driving robot 100 in a sliding scheme, making it convenient for transporting the article and cleaning.

The slide basket 106 may be located between the tray module 131 and the top surface of the lower housing. Although the tray module 131 is shown in the drawing as being located directly above the slide basket 106, the slide basket 106 may be disposed at a location spaced apart from the tray module 131 by a predetermined distance.

The tray frames 1055 are located on left and right sides of the slide basket 106, and a casing of the camera 121 in which the camera 121 is mounted is located in front of the slide basket 106, so that the slide basket 106 may only be withdrawn in a rearward direction and may not be easily withdrawn in other directions, so that stable travel is available.

A handle may be disposed at a rear side such that the slide basket 106 is easily pulled in the rearward direction.

FIG. 5 is an exploded perspective view of the driving robot 100 according to an embodiment of the present disclosure. The upper portion 101 may be separated from the lower portion 101, and when a side casing forming the outer appearance of the tray frame 1055 is removed, a connecting frame 1045 extending upward from the lower portion 101 and a fastening portion of the tray frame 1055 may be exposed. By removing a screw that fastens the connecting frame 1045 with the tray frame 1055, the upper portion 101 may be separated from the lower portion 101 as shown in FIG. 5.

Electronic components of the upper portion 101 may include a load cell 135 that senses weights of the display 151 and the tray module 131, and the electronic component may be connected to the substrate module 181, which is the controller located at the lower portion 101, by connecting a cable along the extension direction of the tray frame 1055.

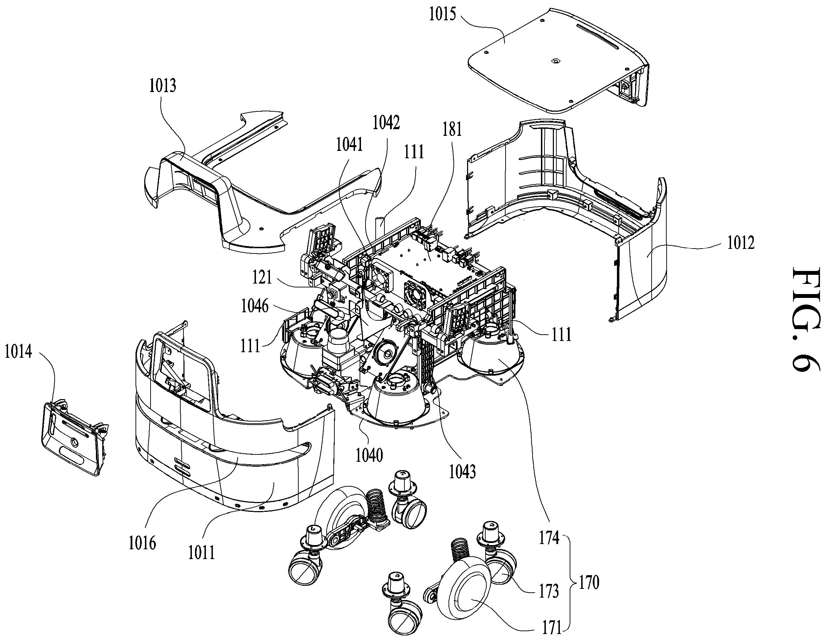

FIG. 6 is an exploded perspective view of the lower portion 101 of the driving robot 100 according to an embodiment of the present disclosure. The lower housing forming the outer appearance of the lower portion 101 may include a first casing 1011 positioned at a front surface of the lower portion, a second casing 1012 positioned at a rear surface of the lower portion, and a third casing 1013 forming a top surface of the lower portion.

The frame assembly 104, the driving unit 170, the substrate module 181, and the battery 191 may be mounted in an electrical component portion surrounded by the first casing 1011, the second casing 1012, and the third casing 1013.

A camera casing protruding from the front side of the lower portion 101 may be equipped as a separate casing independent of the first casing 1011 or the third casing 1013, or as illustrated in FIG. 6, a portion of the third casing 1013 may protrude to form the casing of the camera 121. Because a front side of the camera 121 is equipped with transparent glass that transmits light, a camera cover 1014 may be disposed separately as illustrated in FIG. 6.

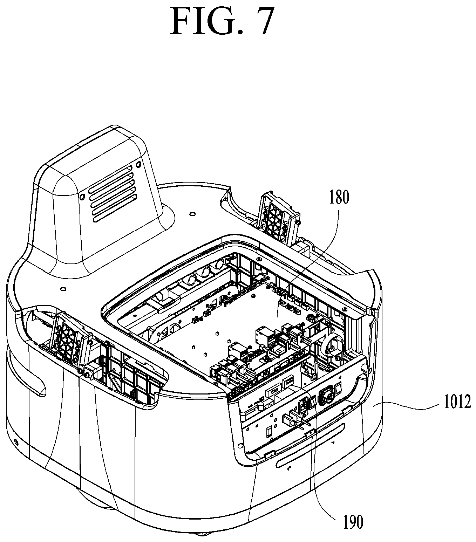

FIG. 7 is a rear perspective view in which a service cover 1015 of the driving robot 100 according to an embodiment of the present disclosure is removed. The easily detachable service cover 1015 may be included such that the lower housing may be easily opened to repair the electronic components mounted at the lower portion 101.

The lower housing may have a large opening defined across a top surface and a rear surface thereof such that the substrate module 181 is sufficiently exposed and is repaired without being withdrawn from the lower housing. The service cover 1015 may be bent in an L-shaped corresponding to the opening.

The frame assembly 104 may use a metal material having rigidity such that the electronic components may be seated thereon, and may include a plate-shaped or bar-shaped member. A waffle-shaped rib may be formed on a surface thereof for the rigidity.

The frame assembly 104 may include a base plate 1040, a front frame 1041, a side frame 1042, a support frame 1043, a fixed frame 1044, and the connecting frame 1045.

The base plate 1040, as a plate-shaped member disposed in a horizontal direction, may form a bottom surface of the lower portion 101. The main wheel 171 and the caster 173 may be coupled as the driving unit 170 to a lower portion of the base plate 1040.

The present embodiment may have a form in which one main wheel 171 is positioned on each of the left and right sides and four casters 173 are arranged at corners. The number of casters 173 may not be limited thereto and may be increased or decreased.

As described above, the caster 173 may rotate around the vertical shaft 1736. To secure a rotation space of the caster 173 and prevent foreign substances from entering the caster 173 and causing a malfunction, a cup-shaped caster housing 174 with an open bottom may be included.

The caster housing 174 is coupled to the base plate 1040. To lower a vertical level of the base plate 1040, the caster housing 174 may have a shape that protrudes upward from the base plate 1040.

The electronic components such as the battery 191, the substrate module 181, the Lidar 142, camera 121 antennas 111, 112, and 113, and the like may be mounted on the base plate 1040. The electronic components may be fixed by being fastened to the frames 1041, 1042, 1043, 1044, and 1045 arranged in a grid shape.

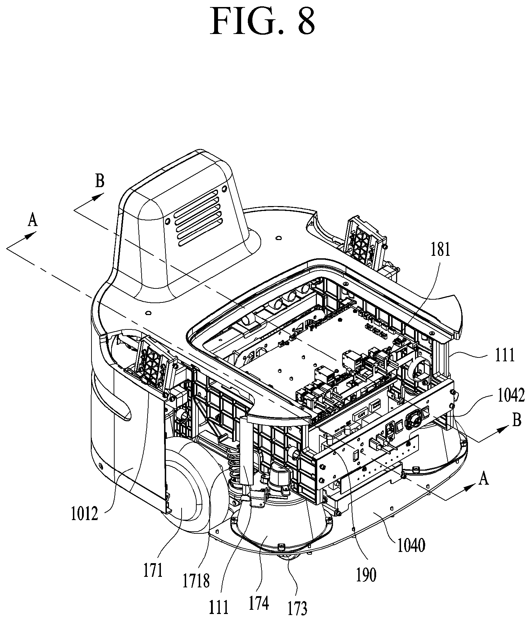

FIG. 8 is a rear perspective view showing a state in which the lower second casing 1012 of the driving robot 100 according to an embodiment of the present disclosure is removed. When the substrate module 181 or the battery 191 needs to be removed for repair or replaced, it is difficult to remove the same by only opening the service cover 1015. When the second casing 1012 is removed, the rear surface of the lower portion 101 may be opened as shown in FIG. 8, so that a rear surface of the substrate module 181 or the battery 191 may be completely exposed.

The frame assembly 104 of the present disclosure does not have a frame located at a rear side. In other words, the substrate module 181 and the battery 191 may be removed in the rearward direction without disassembling the frame assembly 104, which facilitates assembly and maintenance.

The drawing shows the battery 191 positioned on the base plate 1040 and the substrate module 181 positioned thereon. Because the battery 191 is heavier than the substrate module 181, the battery 191 may be positioned under the substrate module 181 such that the substrate module 181 may be directly exposed when the service cover 1015 is opened.

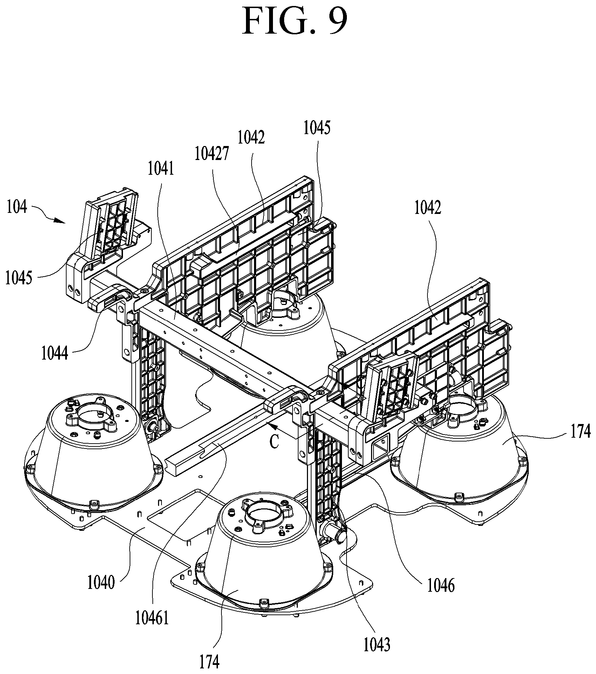

To illustrate a fastening structure of each component on the frame assembly 104, a configuration of the frame assembly 104 will first be described in more detail. FIG. 9 is a view showing the frame assembly 104 of the driving robot 100 according to an embodiment of the present disclosure.

Referring to FIG. 9, the frame assembly 104 has an open rear surface and has left and right side surfaces blocked by the plate-shaped side frames 1042. As described above, because the rear surface is open, the battery 191 and the substrate module 181 may be easily assembled and disassembled.

The frame assembly 104 may include the plate-shaped base plate 1040 on which the battery 191 is seated, the pair of side frames 1042 located on the left and right sides, and the front frame 1041 that connects the pair of side frames 1042 to each other at a front side and extends in the horizontal direction.

The base plate 1040, as the rigid plate-shaped member, may be recessed concavely at a location of the main wheel 171 located beneath the same, and may have an opening defined at a portion where the caster housing 174 is coupled.

The caster housings 174 coupled to the base plate 1040 may be disposed at the four corners of the base plate 1040, and the components mounted on the lower portion 101 may be supported by utilizing top surfaces of the caster housings 174.

The side frames 1042, as the pair of plate-shaped members disposed on the left and right sides, may include lattice-shaped ribs for rigidity. The battery 191 and the substrate module 181 may be seated between the pair of side frames 1042, and the antennas 111, 112, and 113 may be disposed outward of the side frames 1042.

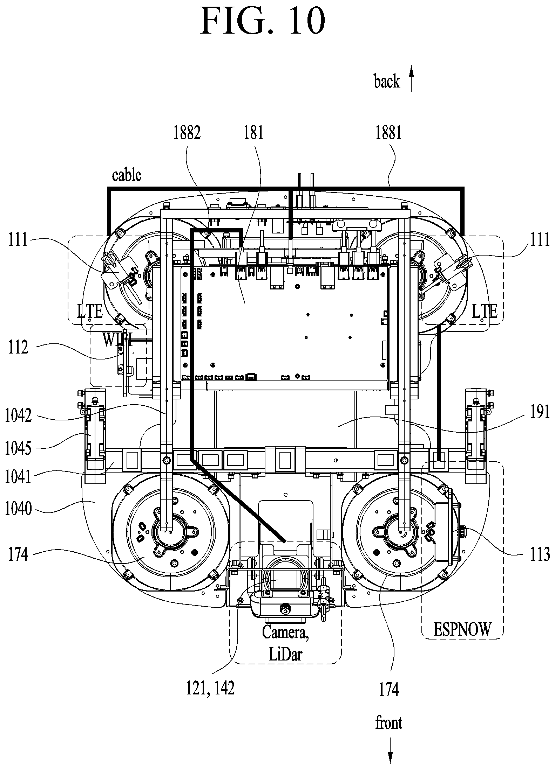

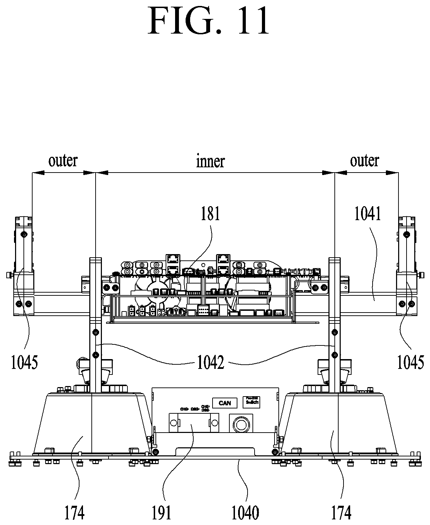

FIG. 10 is a plan view illustrating a lower electrical component portion of the driving robot 100 according to an embodiment of the present disclosure, and FIG. 11 is a rear view illustrating the lower electrical component portion of the driving robot 100 according to an embodiment of the present disclosure. A lower portion in FIG. 10 is a front surface, and an upper portion is a rear surface.

As illustrated in FIG. 11, a space between the pair of side frames 1042 may be referred to as an inner space, and a space located on left and right sides thereof may be referred to as an outer space. The battery 191 and the substrate module 181 may be located in the inner space, and the antenna radiators 111, 112, and1 13 may be located in the outer space.

Referring to FIG. 10, the antenna radiators 111, 112, and 113 may be located outward of the side frames 1042 on the left and right sides. Each of a single WIFI antenna 112 and a single ESPNOW antenna 113 that perform short-range wireless communication may be disposed on one side, and an LTE antenna 111 that uses relatively short waves may be disposed on each of both left and right sides.

The side frame 1042 may be made of a metal material, so that influence of the electronic components located inward of the side frames 1042 on a radiation performance of the antennas 111, 112, and 113 located outward may be minimized.

Because the side frame 1042 does not pass electromagnetic waves therethrough, a mobile communication signal that uses short waves does not reach an opposite side of the side frame 1042. Therefore, a pair of LTE antennas 111 may be disposed on the left and right sides.

Because the rear surface of the frame assembly 104 is open, an antenna cable 1881 connecting the antenna radiator located outward of the side frame 1042 with the substrate module 181 may be connected to the substrate module 181 by extending at the rear of the side frames 1042 as shown in FIG. 10.

As shown in FIG. 10, a cable 1882 connecting the structure such as the camera 121, the Lidar 142, and the like located at the front side with the substrate module 181 may be connected to a connector on a rear surface of the substrate module 181 passing through a space below or above the bar-shaped front frame 1041.

Rear portions of the pair of side frames 1042 may be seated on the top surfaces of the caster housings 174, and front portions thereof may be supported by the support frames 1043. The support frames 1043 may extend vertically from the base plate 1040 and may be fastened to and support not only the side frames 1042 but also the front frame 1041. The front frame 1041, which is coupled to upper sides of the support frames 1043, may be disposed at a predetermined distance from the base plate 1040.

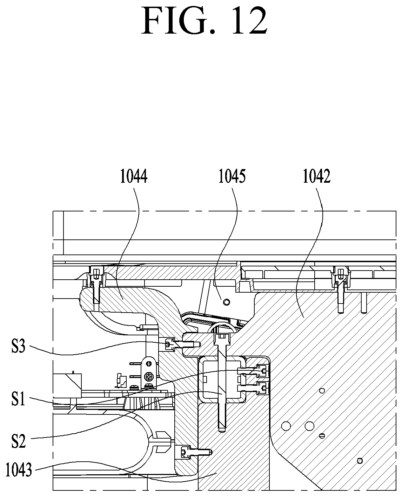

FIG. 12 is a C-C cross-sectional view of FIG. 9, in which the front frame 1041, the side frame 1042, the support frame 1043, and the fixed frame 1044 are illustrated. The front frame 1041 may have a bar shape with a rectangular cross-section, and may be in contact with and fastened to the support frame 1043, the side frame 1042, and the fixed frame 1044 on each rectangular surface.

The support frame 1043 is fixed vertically on the base plate 1040, and the front frame 1041 is disposed on an upper end of the support frame 1043. The upper end of the support frame 1043 is bent in an L shape to be in contact with a bottom surface and a rear surface of the front frame 1041 having the rectangular cross-section.

That is, the front frame 1041 may be disposed such that the bottom surface and the rear surface are in contact with the upper end in the L shape of the support frame 1043. The front frame 1041 and the support frame 1043 may be fixed by inserting a first screw S1 from the rear of the support frame 1043.

The side frame 1042 may include an end having an L shape at a front side, and the end may be disposed to be in contact with a rear surface of the support frame 1043 and a top surface of the front frame 1041.

The side frame 1042 may be disposed on the rear surface of the support frame 1043 while covering the first screw S1 that fastens the support frame 1043 with the front frame 1041, and may be fastened with the front frame 1041 via a second screw S2 that extends through a portion located at the top surface of the front frame 1041.

In this regard, to further increase a fastening force, as shown in FIG. 12, the second screw S2 may also be fastened to the support frame 1043 by extending through the front frame 1041.

The fixed frame 1044 that is fastened with the side frame 1042 and the support frame 1043 at the same time while being in contact with the front surface of the front frame 1041 may be further included. The fixed frame 1044 may increase a force of fastening with the front frame 1041 such that the side frame 1042 and the support frame 1043 do not deviate in the rearward direction.

The rectangular cross-section of the front frame 1041 may be firmly fixed by being surrounded by the support frame 1043, the side frame 1042, and the fixed frame 1044.

Referring to FIG. 9, the front frame 1041 includes the connecting frames 1045 that are connected to the upper portion 101 at both ends thereof. The connecting frame 1045 may be fastened to a lower end of the tray frame 1055 to support the upper portion 102, and may support a weight of the upper portion 101.

A support bar 1046 coupled to the top surface of the base plate 1040 may be included. The support bar 1046, as a bar-shaped member that extends in a front and rear direction, may guide fastening of the battery 191 while reinforcing the rigidity of the base plate 1040.

A pair of support bars 1046 may be arranged in a left and right direction as shown in FIG. 9, and the battery 191 may slide in the front and rear direction along the support bars 1046.

Referring to FIG. 11, the substrate module and the battery 191 module positioned between the side frames 1042 are illustrated. The substrate module 181 may have a width corresponding to a distance between the pair of side frames 1042 and may have both ends respectively fixed to the side frames 1042.

The battery 191 is positioned on the base plate 1040 and positioned between the caster housings 174 coupled to the base plate 1040. Because a distance between the pair of caster housings 174 positioned on the left and right sides is smaller than the distance between the pair of side frames 1042, the battery 191 may be smaller in the width in the left and right direction than the substrate module 181.

When the width of the battery 191 becomes greater, it is difficult to assemble and remove the battery 191 in the front and rear direction in the sliding manner. In addition, considering an arrangement of the main wheel 171 and the driving motor 1715 located between the caster housings 174 arranged in the front and rear direction, the width of the battery 191 may be equal to or smaller than the distance between the pair of caster 173 modules in the left and right direction.

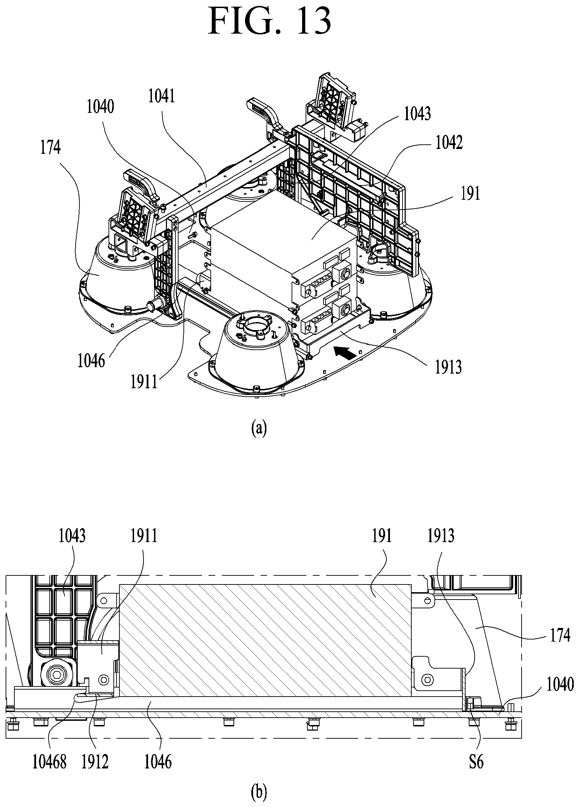

Hereinafter, a method for fastening the substrate module 181 and the battery 191 module to the frame assembly 104 will be described with reference to FIGS. 12 and 13.

FIG. 13 is a view for illustrating a method for fastening the battery 191 of the driving robot 100 according to an embodiment of the present disclosure to the frame assembly 104. As shown in (a) in FIG. 13, the pair of support bars 1046 positioned on the base plate 1040 may include rails 10461 formed in an L shape and opposite to each other.

A front bracket 1911 coupled to a front side of the battery 191 may include a guide protrusion 1912 that is seated on the rail of the support bar 1046.

(b) in FIG. 13 is an A-A cross-sectional view of FIG. 8. The guide protrusion 1912 moved to an end of the rail 10461 of the support bar 1046 may be inserted into and fixed to a battery clip 10468 formed at an end of the support bar 1046.

As shown in (a) in FIG. 13, the guide protrusion 1912 may be fitted into the battery clip 10468 by protruding laterally toward the rail 10461 as well as forwardly.

The battery clip 10468 may apply a pressing force onto the guide protrusion 1912 from above, so that the guide protrusion 1912 may be inserted and fixed between the rail 10461 of the support bar 1046 and the battery clip 10468.

The battery clip 10468 may temporarily fix the battery 191 before fastening the battery 191 with a screw S6 rather than providing a strong fastening force, thereby fixing the battery 191 such that poor fastening resulted from shaking of the battery 191 does not occur when the battery 191 is fastened with the screw S6.

After inserting the battery 191 forward, the screw S6 may be fixed to the support bar 1046 by extending through a rear bracket 1913 located at the rear of the battery 191.

The front bracket 1911 is fixed by being inserted into the rail 10467 of the support bar 1046 and the battery clip 10468, and the rear bracket 1913 is fastened to the support bar 1046 with the screw S6, so that the battery 191 may be stably fixed to the frame assembly 104.

The screw S6 may be removed and then the battery 191 may be removed by being pulled rearward, so that the battery 191 may be easily replaced. When the battery 191 is removed, the rear bracket 1913 may also serve as a handle to hold for removing the battery 191.

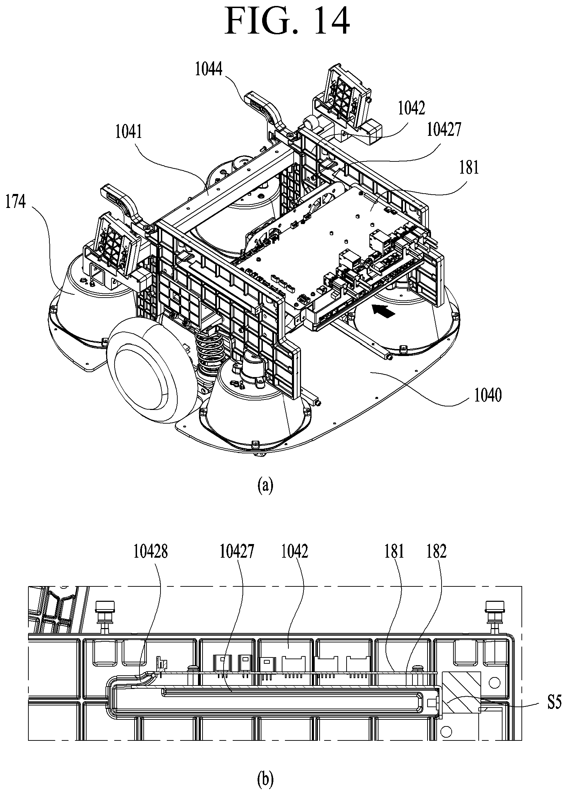

FIG. 14 is a view for illustrating a method for fastening the substrate module 181 of the driving robot 100 according to an embodiment of the present disclosure to the frame assembly 104.

shown in (a) in FIG. 14, the substrate module 181 may be pushed forward from the rear to be fastened to the frame assembly 104. Because the substrate module 181 has the width corresponding to the distance between the pair of side frames 1042, both ends of the substrate module 181 may move along substrate rails 10427 formed on the side frames 1042.

The substrate module 181 may move forward along the substrate rail 10427, and an end of the substrate rail 10427 may include a substrate clip 10428 to which the substrate module 181 is fixed. The substrate clip 10428 may press a front end of the substrate module 181 moving along the substrate rail 10427 from above, so that the substrate module 181 may be fixed.

The substrate module 181 may be fixed to the substrate rail 10427 with a screw S5 at a rear end of the substrate rail 10427 like the battery 191. The substrate module 181 may be simply removed from the frame assembly 104 by removing the screw S5 and then pulling the substrate module 181 rearward.

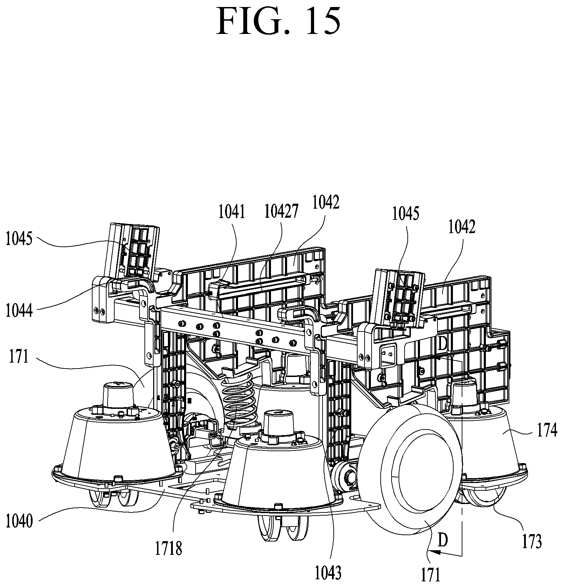

FIG. 15 is a view illustrating the frame assembly 104 and the driving unit 170 of the driving robot 100 according to an embodiment of the present disclosure. The driving unit 170 includes the caster 173 fixed inside the caster housing 174 and the main wheel 171 coupled to a side of the frame assembly 104.

Dampers 1718 and 1738 may be included between the frame assembly 104 and the driving unit 170 to absorb, when there is an uneven surface on the floor, the unevenness without transmitting the same to the tray module 131 located above. The dampers 1718 and 1738 may include an elastic material, and in the present embodiment, coil spring-type dampers 1718 and 1738 may be used.

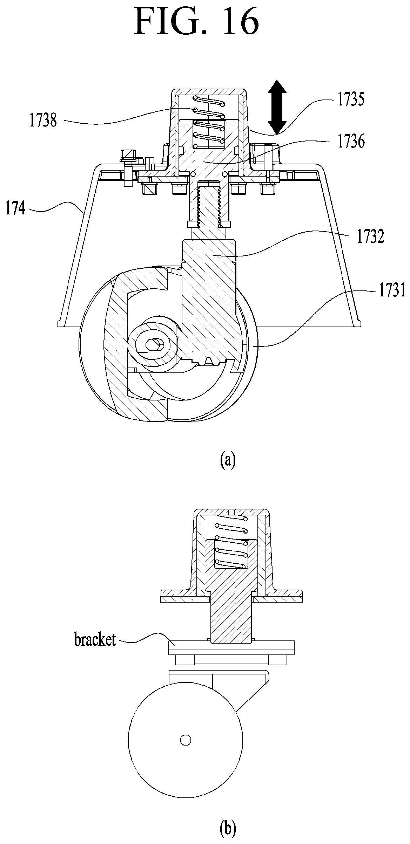

FIG. 16 shows the caster 173 according to an aspect of the present disclosure and an existing caster 173. (a) in FIG. 16 is a D-D cross-sectional view of FIG. 13, and (b) in FIG. 16 is a conceptual diagram of the existing caster 173.

To implement a suspension structure that absorbs a lower impact in the caster 173, a caster damper 1738 fixed to the upper end of the caster housing 174 and extending and contracting vertically, and the shaft 1736 coupled to a lower end of the caster damper 1738 and moving vertically may be included.

The caster 173 may be composed of the caster body 1732 rotatably coupled to the shaft 1736 and the caster wheel 1731 coupled to the cast body to be rotatable about a horizontal axis, and the cup-shaped caster housing 174 may be disposed in a form that surrounds the caster 173.

(b) in FIG. 16 is related to the existing caster 173. The existing caster 173 has a rotatable portion that rotates around a vertical shaft on the caster body 1732, and uses a separate bracket to fasten the caster body 1732 to the shaft 1736.

The caster 173 of the present embodiment is directly rotatably coupled to the shaft 1736, so that the separate rotatable portion or bracket may be omitted, thereby preventing an impact resulted from the bracket colliding with an upper portion of the caster housing 174 from occurring and decreasing a height of the caster 173.

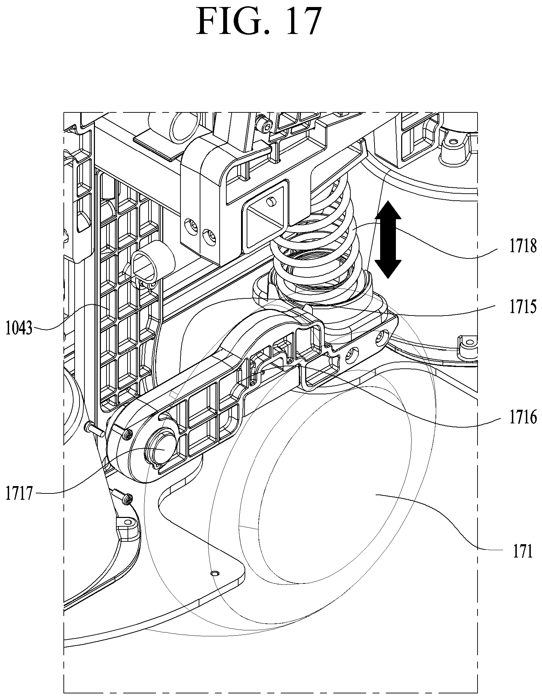

FIG. 17 is a view showing the main wheel 171 of the driving robot 100 according to an embodiment of the present disclosure. The main wheel 171 requires the driving motor 1715 for providing the power. The main wheel 171 is coupled to the driving motor 1715 and is rotatable when the driving motor 1715 is operated.

The driving motor 1715 may be coupled to a wheel frame 1716, and one side of the wheel frame 1716 may be hinge-coupled to the support frame 1043 and move relative to the support frame 1046.

To implement the suspension structure that absorbs the lower impact like the caster 173, a wheel damper 1718 connecting the wheel frame 1716 with the side frame 1042 may be included.

One side of the wheel frame 1716 is rotatably coupled 1717 with the frame assembly 104, and the other side thereof has the wheel damper 1718, so that when there is an impact, the wheel damper 1718 may be compressed and the wheel frame 1716 may rotate, and thus a location of the main wheel 171 relative to the base plate 1040 may vary.

That is, when the main wheel 171 passes over the uneven surface of the floor, the frame assembly 104 may continue traveling without shaking.

As described above, the driving robot 100 of the present disclosure is easy to maintain because the rear side of the frame assembly 104, where the electronic components are mounted, is open.

The driving robot 100 of the present disclosure is easy to maintain because the substrate module 181 and the battery 191 may be easily removed and assembled.

The driving robot of the present disclosure may secure the performance of the antenna by arranging the antenna and other components in the separated manner.

The caster 173 is connected in series to the caster housing 174, so that the caster 173 may implement the stable suspension structure without colliding with the housing. It will be apparent to those skilled in the art that the present disclosure may be embodied in other specific forms without departing from the spirit and essential characteristics of the disclosure. Thus, the above embodiments are to be considered in all respects as illustrative and not restrictive. The scope of the disclosure should be determined by reasonable interpretation of the appended claims and all change which comes within the equivalent scope of the disclosure are included in the scope of the disclosure.

## Claims

1. A driving robot comprising:
a lower housing;
a frame assembly positioned inside the lower housing;
a driving structure positioned under the frame assembly;
a battery seated on the frame assembly; and
a substrate module coupled to the frame assembly and positioned above the battery,
wherein the frame assembly includes:
a base plate;
a pair of side frames positioned on left and right sides of the battery; and
a front frame positioned at a front side of the frame assembly and connected to the pair of side frames.

2. The driving robot of claim 1, wherein the pair of side frames include:
substrate rails formed on respective surfaces thereof facing each other; and
substrate clips positioned at front ends of the respective substrate rails, wherein an end of the substrate module is fitted into each substrate clip.

3. The driving robot of claim 2, further comprising a screw fastening portion located at a rear end of each substrate rail, wherein a screw for fixing the substrate module is inserted into the screw fastening portion.

4. The driving robot of claim 1, further comprising antenna radiators located outward on left and right sides of the pair of side frames.

5. The driving robot of claim 4, further comprising an antenna cable having one end coupled to a rear surface of the substrate module and bent into a U shape at the rear of the side frames to allow an opposite end thereof to be connected to one of the antenna radiators.

6. The driving robot of claim 1, wherein the frame assembly has an open rear surface, and includes a seating portion of the battery defined by the base plate, the front frame, and the pair of side frames.

7. The driving robot of claim 1, wherein the driving structure includes:
a caster housing coupled to the base plate and having an open bottom;
a caster damper fixed to an upper end of the caster housing and extendable and contractable vertically;
a shaft coupled to a lower end of the caster damper and moveable vertically;
a caster body rotatably fastened to the shaft; and
a caster wheel coupled to the caster body to be rotatable about a horizontal axis.

8. The driving robot of claim 7, wherein one side of each side frame is supported by the caster housing.

9. The driving robot of claim 7, wherein the caster housing includes a first caster housing located at a left side of the base plate and a second caster housing located at a right side of the base plate,
wherein the battery has a size corresponding to a gap between the first caster housing and the second caster housing.

10. The driving robot of claim 9, further comprising a pair of base support bars located on the base plate between the first caster housing and the second caster housing,
wherein the battery slides in a front and rear direction along the base support bars.

11. The driving robot of claim 10, wherein each base support bar includes:
a battery clip located at a front end thereof, wherein a guide protrusion of the battery is fitted into the battery clip; and
a screw fastening portion located at a rear end thereof, wherein a screw for fixing the battery is inserted into the screw fastening portion.

12. The driving robot of claim 1, further comprising a pair of support frames extending upward from the base plate and supporting a lower portion of the front frame,
wherein the pair of support frames are positioned on the same plane as the pair of side frames.

13. The driving robot of claim 12, wherein the driving structure includes:
a wheel frame having one side hinge-coupled to the frame assembly and coupled with a driving motor;
a main wheel rotatable by being fastened to the driving motor; and
a wheel damper positioned between an opposite side of the wheel frame and the frame assembly.

14. The driving robot of claim 12, wherein the front frame has a rectangular bar shape extending in a left and right direction,
wherein each support frame is in contact with a bottom surface and a rear surface of the front frame,
wherein each side frame is in contact with a rear surface of each support frame and a top surface of the front frame,
wherein the frame assembly further includes a fixed frame located on a front surface of the front frame and fastened to each side frame and each support frame.

15. The driving robot of claim 14, further comprising:
a first screw inserted into the rear surface of each support frame and fastened to the front frame;
a second screw inserted into a top surface of each side frame and fastened to each support frame by extending through the front frame; and
a third screw inserted into a front surface of the fixed frame and fastened to each side frame and each support frame.

16. The driving robot of claim 1, further comprising:
a Lidar or a camera coupled to a front surface of the base plate; and
a sensor cable connecting the Lidar or the camera with the substrate module and passing through a space below the front frame.

17. The driving robot of claim 1, wherein the lower housing includes:
an opening defined across a rear surface and a top surface of the lower housing, wherein the substrate module is exposed through the opening; and
an L-shaped service cover covering the opening.

18. The driving robot of claim 1, further comprising:
a tray frame coupled to an upper portion of the lower housing and extending upward; and
a tray module coupled to the tray frame.

19. The driving robot of claim 18, further comprising connecting frames coupled to both sides of the front frame,
wherein the tray frame is fastened to the connecting frames.
